Europäisches Patentamt

European Patent Office

Office européen des brevets

(11) Publication number: **0 201 154**
**B1**

(12) **EUROPEAN PATENT SPECIFICATION**

(45) Date of publication of patent specification: **17.05.89**

(21) Application number: **86300801.7**

(22) Date of filing: **06.02.86**

(51) Int. Cl.⁴: **F 16 B 13/14,** F 16 B 37/04

(54) **Fixing device.**

(30) Priority: **10.05.85 GB 8511843**

(43) Date of publication of application:
**12.11.86 Bulletin 86/46**

(45) Publication of the grant of the patent:
**17.05.89 Bulletin 89/20**

(84) Designated Contracting States:
**AT BE CH DE FR GB IT LI LU NL SE**

(56) References cited:
**WO-A-82/04106**
**CH-A- 577 639**
**GB-A-1 392 095**

(73) Proprietor: **ROCOL LIMITED**
**Rocol House Wakenfield Road**
**Swillington Leeds LS26 8BS (GB)**

(72) Inventor: **Wilson, Francis Michael**
**49, Whitedown**
**Alton Hampshire (GB)**

(74) Representative: **Boff, James Charles et al**
**c/o Phillips & Leigh 7 Staple Inn Holborn**
**London WC1V 7QF (GB)**

Courier Press, Leamington Spa, England.

## Description

The present invention relates to a fixing device, comprising a flexible sleeve having at one end a nut for receiving a screw or bolt, for anchoring the screw or bolt in a hole in a structure.

A device of this type which has been known for at least thirty years comprises a rubber flexible sleeve having a brass or brass-plated hexagonal nut embedded therein at one of its ends. The sleeve has an integrally moulded annular flange at its other end. The nut is hexagonal in order to anchor it securely in the sleeve. However, the use of a hexagonal nut lead to difficulties in the production of the device.

A proposal for overcoming these difficulties is described in GB—A—1,392,095. In the device described in this patent specification, the hexagonal nut is replaced by a cylindrical nut which preferably has in its outer surface a circumferential groove for keying the nut into the sleeve.

In use of these devices, the sleeve is passed through a hole in, for instance, a sheet metal panel until the flange abuts the panel. A bolt is then passed into the sleeve and is screwed into the nut. As the bolt screws into the nut, the sleeve is compressed axially and is therefore forced to expand radially. The radial expansion of the sleeve produces a protuberance abutting the panel which prevents the device from being withdrawn from the hole.

It has recently been proposed to use a fixing device of this type to anchor articles such as "sleeping policemen" or machinary to solid surfaces, such as roads or factory floors. However, it has been found that in cases where considerable force is exerted on the fixing device for instance by traffic passing at ordinary speeds over a sleeping policeman, it is not possible properly to anchor the device on the surface. Moreover, it has proved difficult fully to insert the bolt in the nut since the whole device tends to rotate during the screwing of the bolt into the nut.

It is an aim of the present invention to provide an improved fixing device of the type described above.

According to the present invention, there is provided a fixing device, for anchoring a screw or bolt in a hole in a structure, comprising a flexible sleeve having a cylindrical outer surface and a nut, for receiving the screw or bolt, fixedly disposed in the sleeve near one end thereof, the peripheral surface of the nut being enclosed by the sleeve, characterized in that the outer surface of the sleeve is provided with annular ribs for hindering extraction of the radially expanded sleeve from the hole; and at least one axial rib protruding marginally beyond the cylindrical outer surface of the sleeve for hindering rotation of the sleeve during screwing of the screw or bolt into or out of the nut.

Preferably, there are two axial ribs disposed diametrically opposite one another. However, any number of axial ribs can alternatively be used so long as their presence does not interfere with the operation of the annular ribs.

The amount the axial rib(s) protrude(s) will depend on the size of the hole into which the sleeve is to be placed. The amount should not be so great as to prevent the annular ribs, once the sleeve has been radially expanded, from contacting firmly the sides of the hole. The amount of protuberance can be readily determined by trial and error experimentation by the skilled person. As a general guide it is preferable that the radius to the outside of an axial rib should not be more than 110% of the radius of the sleeve.

Preferably, the annular ribs are asymmetric about a plane perpendicular to the axis of the sleeve, and in particular it is advantageous if the side of each rib remote from the nut is parallel to the plane and the other side of each rib is angled inwardly, conveniently at an angle of about 45°, towards the nut. This facilitates insertion of the sleeve into the hole but makes it much more difficult to extract the radially expanded sleeve from the hole.

The annular and axial ribbing on the sleeve is preferably located in a single central area of the sleeve. Alternatively, the ribbing may extend the whole length of the sleeve or may be formed in a number of separate areas of the sleeve.

The ribbing is preferably formed by moulding the sleeve in the appropriate shape. Alternatively the ribs could be cut out of the sleeve or adhered thereto.

The sleeve may be made from any flexible material, but is preferably made from an elastomeric material such as natural rubber, synthetic rubber or blends thereof. The elastomeric material may contain pigments, fillers, antioxidants, stabilisers or any of the other additives known in the art. Particularly suitable elastomeric materials are rubber compositions used to produce vehicle tyres.

The nut may be fixed in the sleeve by any of the methods known in the art. For instance the sleeve may be moulded around a nut blank which is subsequently tapped to provide an internal thread. Alternatively, the nut may be adhesively secured or bonded in a recess in a pre-formed sleeve. In a further alternative a combination of moulding and bonding may be used.

The nut may be of any desired shape, but is preferably circular, and may be made from any suitable material such as steel, stainless steel, brass or brass-plated steel.

If desired an integral annular flange may be formed on the end of the sleeve remote from the nut. This will be necessary if it is intended to insert the sleeve into a hollow space behind a panel. However, it will not be necessary if the hole is formed as a well in a solid structure such as a road or factory floor.

It is envisaged that the fixing device of the present invention will be of use in any of the applications for which the prior art fixing devices have been used. However, the fixing device of the present invention will be of particular use in fixing bolts or screws in solid structures such as roads or factory floors.

In use in such an application, a hole is formed in the surface and a fixing device according to the invention of appropriate dimensions is placed in the hole. The device will be of such dimensions that the axial ribs engage the wall of the hole.

The bolt is then inserted into the sleeve and screwed into the nut. As the bolt is screwed into the nut, any tendency for the sleeve to turn in the hole is removed by the interaction of the axial ribs and the wall of the hole.

As the bolt is screwed into the nut, the sleeve is compressed axially and is therefore expanded radially. This brings the annular ribs into tight abutment with the wall of the hole. The annular ribs will be able to physically interlock with rough areas on the wall so that the sleeve is retained in the hole by more than just friction between the wall and the sleeve.

It can thus be seen that the fixing device of the present invention overcomes the disadvantages of known fixing devices of the same type.

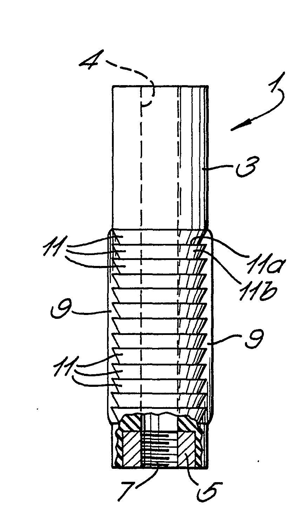

One embodiment of a fixing device according to the invention is described below, by way of example only, with reference to the accompanying drawing which is a front view, partly in section, of the fixing device.

Referring now to the drawing, the fixing device 1 comprises a cylindrical sleeve 3 made from a high quality rubber, comprising a blend of natural and synthetic rubber together with the appropriate ingredients to give excellent ageing and low set characteristics. Such rubbers and their formulation and compounding are well known in the art.

The sleeve 3 defines a through bore 4 for receiving therein a bolt (not shown).

The device 1 further comprises a circular nut 5 fixed into one end of the sleeve 3. The nut 5 was provided with a pretapped thread and the sleeve was moulded around the blank. The nut 5 was further fixed in the sleeve 3 by application of a bonding agent to the exterior unthreaded area of the nut before the moulding of the sleeve 3.

The sleeve 3 has formed on the outside of a central section thereof two diametrically opposed axial ribs 9 and a plurality of annular ribs 11.

The axial ribs 9 protrude marginally beyond the outer surface of the sleeve 3, but the edges of the annular ribs 11 are in the same plane as the outer surface of the sleeve 3. The annular ribs 11 each comprise a surface 11a remote from the nut 5 which is perpendicular to the axis of the sleeve 3 and a surface 11b adjacent the nut 5 which is angled inwardly towards the nut 5.

In use, the fixing device 1 is placed into, for instance, a blind well in a road surface with its nut 5 adjacent the blind end of the well and its other end adjacent the road surface. The diameter of the well should be the same as or marginally smaller than the diameter of the sleeve including the axial ribs 9. Due to their shape, the annular ribs 11 do not significantly interfere with insertion of the sleeve 3 into the well.

A "sleeping policeman" is then fixed to the road surface by passing a bolt through a suitable hole in the sleeping policeman and into the sleeve 3. The bolt is then screwed into the nut 5. Since the axial ribs 9 abut tightly the wall of the well, there is little or no tendency for the sleeve 3 to rotate in the well, thus facilitating screwing up of the bolt.

As the bolt is screwed into the nut 5, the sleeve 3 is compressed axially between the nut 5 and the bottom of the sleeping policeman. This causes the sleeve 3 to expand radially, thus bringing the annular ribs 11 into tight abutment with the wall of the well. This of itself will make it difficult to remove the sleeve 3 from the well. However, this effect is enhanced by the shape of the annular ribs 11, the surfaces 11a of which will physically interlock with the wall of the well.

It has been found that, if a fixing device of the present invention is used, it is extremely difficult for traffic moving at ordinary, or even excessive, speeds to remove sleeping policemen from a road surface. Using the fixing devices of the prior art, it was possible for traffic to overcome the anchoring effect of the device.

Moreover, the fixing device of the present invention has been used to anchor a machine tool to a factory floor. This has proved to be a very effective way of anchoring the machine tool, and there has been no sign of any weakening of the anchorage.

It is nonetheless easy to remove the anchored article merely by unscrewing the bolt. This will be facilitated by the presence of the axial ribs 9 which will prevent the sleeve 3 from rotating while the bolt is being unscrewed.

## Claims

1. A fixing device, for anchoring a screw or bolt in a hole in a structure, comprising a flexible sleeve (3) having a cylindrical outer surface and a nut (5), for receiving the screw or bolt, said nut being fixedly disposed in the sleeve near one end thereof, the peripheral surface of the nut being enclosed by the sleeve, characterized in that the outer surface of the sleeve is provided with annular ribs (11) for hindering extraction of the radially expanded sleeve from the hole; and at least one axial rib (9) protruding marginally beyond the cylindrical outer surface of the sleeve for hindering rotation of the sleeve during screwing of the screw or bolt into or out of the nut.

2. The fixing device of claim 1, wherein there are two axial ribs (9) disposed diametrically opposite one another.

3. The fixing device of claim 1 or claim 2, wherein the radius to the outside of the axial rib (9) is not more than 110% of the radius of the sleeve.

4. The fixing device of any one of claims 1 to 3, wherein the annular ribs (11) are asymmetric about a plane perpendicular to the axis of the sleeve (3).

5. The fixing device of claim 4, wherein the side of each annular rib (11) remote from the nut is parallel to that plane and the other side of each annular rib is angled inwardly, towards the nut.

6. The fixing device of claim 5, wherein each annular rib (11) is angled at 45°.

7. The fixing device of any one of claims 1 to 6, which is made from an elastomeric material such as natural rubber, synthetic rubber or blends thereof.

8. The fixing device of any one of claims 1 to 7, wherein the sleeve (3) is moulded around a nut blank which is subsequently tapped to provide an internal thread.

9. The fixing device of any one of claims 1 to 7, wherein the nut (5) is adhesively secured or bonded in a recess in a pre-formed sleeve (3).

10. The fixing device of any one of claims 1 to 9, and including an integral annular flange formed on the end of the sleeve remote from the nut (5).

**Patentansprüche**

1. Befestigungsvorrichtung zum Verankern einer Schraube oder eines Bolzens in einer Bohrung in einer Struktur, die eine biegsame, mit einer zylindrischen Außenfläche und einer Schraubenmutter (5) versehene Hülse (3) aufweist, um die Schraube oder den Bolzen zu halten, wobei die Schraubenmutter (5) in der Hülse (3) an einem ihrer Enden fest angeordnet ist, und wobei die Umfangsoberfläche der Schraubenmutter durch die Hülse (3) eingeschlossen ist, dadurch gekennzeichnet, daß die Außenfläche der Hülse (3) mit ringförmigen Rippen (11) versehen ist, um das Herausziehen der radial ausgedehnten Hülse (3) aus der Bohrung zu verhindern; und mindestens eine axiale, über die zylindrische Außenfläche der Hülse (3) etwas vorspringende Rippe (9) vorgesehen ist, um das Drehen der Hülse (3), während die Schraube oder der Bolzen in der Schraubenmutter (5) hinein oder aus ihr geschraubt wird, zu verhindern.

2. Befestigungsvorrichtung nach Anspruch 1, dadurch gekennzeichnet, daß zwei diametral einander gegenüberliegende axiale Rippen (9) vorgesehen sind.

3. Befestigungsvorrichtung nach Anspruch 1 oder 2, dadurch gekennzeichnet, daß der Radius bis zur Außenseite einer axialen Rippe (9) nicht mehr als 110% des Radius der Hülse (3) beträgt.

4. Befestigungsvorrichtung nach einem der Ansprüche 1 bis 3, dadurch gekennzeichnet, daß die ringförmigen Rippen (11) sich asymmetrisch bezüglich einer lotrecht auf der Achse der Hülse (3) stehenden Ebene befinden.

5. Befestigungsvorrichtung nach Anspruch 4, dadurch gekennzeichnet, daß die von der Schraubenmutter (5) entfernte Seite jeder ringförmigen Rippe (11) parallel zu dieser Ebene läuft und die andere Seite jeder ringförmigen Rippe (11) nach innen zu der Schraubenmutter (5) geneigt ist.

6. Befestigungsvorrichtung nach Anspruch 5, dadurch gekennzeichnet, daß jede ringförmige Rippe (11) unter einem Winkel von 45° geneigt ist.

7. Befestigungsvorrichtung nach einem der Ansprüche 1 bis 6, dadurch gekennzeichnet, daß es aus einem elastomerischen Material wie Naturkautschuk, Kunstgummi oder Mischungen davon besteht.

8. Befestigungsvorrichtung nach einem der Ansprüche 1 bis 7, dadurch gekennzeichnet, daß die Hülse (3) um einen Rohling einer Mutter geformt wird, die anschließend geschnitten wird, um sie mit einem Innengewinde zu versehen.

9. Befestigungsvorrichtung nach einem der Ansprüche 1 bis 7, dadurch gekennzeichnet, daß die Schraubenmutter (5) in einer Aussparung einer vorgeformten Hülse (3) anhaftend gesichert oder festgehalten ist.

10. Befestigungsvorrichtung nach einem der Ansprüche 1 bis 9, dadurch gekennzeichnet, daß sie einen einstückigen Flansch aufweist, der an dem von der Schraubenmutter (5) entfernten Ende der Hülse (3) angeformt ist.

**Revendications**

1. Dispositif de fixation pour ancrer une vis ou un boulon dans un trou ou dans une structure, comportant un manchon (3) ayant une surface extérieure cylindrique et un écrou (5) pour recevoir la vis ou le boulon, cet écrou étant fixé dans le manchon au voisinage d'une extrémité de celui-ci, la surface périphérique de l'écrou étant entourée par le manchon, caractérisé en ce que la surface extérieure du manchon présente des nervures annulaires (11) pour empêcher l'extraction hors du trou du manchon radialement dilaté, et au moins une nervure axiale (9) dépassant marginalement au-delà de la surface extérieure cylindrique du manchon pour empêcher le manchon de tourner lors du vissage de la vis ou du boulon dans l'écrou ou lors de son dévissage.

2. Dispositif de fixation selon la revendication 1, dans lequel il y a deux nervures axiales (9) disposées diamétralement opposées l'une à l'autre.

3. Dispositif de fixation selon la revendication 1 ou la revendication 2, dans lequel le rayon à l'extérieur d'une nervure axiale (9) n'est pas supérieure à 110% du rayon du manchon.

4. Dispositif de fixation selon l'une quelconque des revendications 1 à 3, dans lequel les nervures annulaires (11) sont asymétriques par rapport à un plan perpendiculaire à l'axe du manchon (3).

5. Dispositif de fixation selon la revendication 4, dans lequel le côté de chaque nervure annulaire (11) opposé à l'écrou est parallèle à ce plan et l'autre côté de chaque nervure annulaire est incliné vers l'intérieur en direction de l'écrou.

6. Dispositif de fixation selon la revendication 5, dans lequel chaque nervure annulaire (11) est inclinée à 45°.

7. Dispositif de fixation selon l'une quelconque des revendications 1 à 6, qui est en une matière élastomère telle que le caoutchouc naturel, un caoutchouc synthétique ou un mélange des deux.

8. Dispositif de fixation selon l'une quelconque des revendications 1 à 7, caractérisé en ce que le manchon (3) est moulé autour d'une ébauche d'écrou, qui est ensuite taraudée pour obtenir un filetage intérieur.

9. Dispositif de fixation selon l'une quelconque des revendications 1 à 7, dans lequel l'écrou (5) est fixé par adhérence ou collé dans une cavité dans un manchon préformé (3).

10. Dispositif de fixation selon l'une quelconque des revendications 1 à 9, comportant une collerette annulaire monobloc formée sur l'extrémité du manchon opposée à l'écrou (5).